# EUROPEAN PATENT SPECIFICATION

(11) **EP 1 744 557 B1**
(45) Date of publication and mention of the grant of the patent: **23.10.2013**
(21) Application number: 06741898.8
(22) Date of filing: 17.05.2006
(51) Int. Cl.: H04L 12/54, H04N 21/61, H04N 21/647

(54) **METHOD AND DEVICE FOR SHAPING THE SERVICE FLOW TRANSMITTED IN NETWORK**
VERFAHREN UND ANORDNUNG ZUM GESTALTEN DES DURCHFLUSS VON DIENSTEN IN EINEM NETZWERK
MÉTHODE ET DISPOSITIF POUR METTRE EN FORME LE FLUX DE SERVICES TRANSMIS DANS UN RÉSEAU

(30) Priority: 17.05.2005 CN 200510070612
(43) Date of publication of application: 17.01.2007
(73) Proprietor: Huawei Technologies Co., Ltd., Longgang District, Shenzhen Guangdong 518129 (CN)
(72) Inventor: XIE, Weiping, Shenzhen, Guangdong 518129 (CN); WU, Haijun, Shenzhen, Guangdong 518129 (CN)
(74) Representative: Isarpatent
(86) International application number: PCT/CN2006/001010
(87) International publication number: WO 2006/122501

(56) References cited:
- EP-A2- 1 185 043
- WO-A-02/103521
- WO-A-2004/021708
- WO-A1-03/047179
- WO-A1-2004/034731
- CN-A- 1 285 691
- JP-A- 2005 039 515
- US-A- 5 968 132
- US-A1- 2001 038 639
- US-A1- 2004 042 399
- US-A1- 2004 196 788
- FAN ZHANG ET AL INSTITUTE OF ELECTRICAL AND ELECTRONICS ENGINEERS: "Rate-controlled scheduling for networked multimedia applications" CONFERENCE PROCEEDINGS OF THE 2003 IEEE INTERNATIONAL PERFORMANCE, COMPUTING, AND COMMUNICATIONS CONFERENCE. (IPCCC). PHOENIX, AZ, APRIL 9 - 11, 2003, IEEE INTERNATIONAL PERFORMANCE, COMPUTING AND COMMUNICATIONS CONFERENCE, NEW YORK, NY : IEEE, US, vol. CONF. 22, 9 April 2003 (2003-04-09), pages 395-403, XP010642244 ISBN: 0-7803-7893-8

## Description

### Field of the Invention

The present invention relates to the network communication technology, particularly to a method and a device for shaping traffic flow transmitted in a network.

### Background of the Invention

Along with rapid development of the network technology, network communication services have been abundant. At present, operators are preparing for a large-scale building for IP television (IPTV). As the IPTV is relative to a whole network solution and characterized in a larger amount of network flow with certain burstness, and all levels of equipments in the existing network lack a comprehensive consideration in the processing of the burst flow, the IPTV service meets quite a lot of difficulties at its initial development stage.

Now the most difficult problem is that the access device is influenced by the burst flow. The access device generally refers to the Digital Subscriber Line Access Multiplexer (DSLAM) equipment.

Because a simple Personal Computer (PC) or a server with a limited processing capacity is used as a TV video source server by many operators, when video source is encoded by the TV video source server, the flow can not be uniformly processed which results in that when the TV video source is sent from the TV video source server after being encoded, data flow sent from the TV video source server has a high burstness; the data flow with a high burstness will be sent to a access device via a convergent network and then forwarded by the access device to a customer premises equipment (CPE).

In an existing communication network, the convergent equipment generally has a higher buffer capacity, so it allows of a high burstness of the IPTV service; however, the access device can not allow of a high burstness of the IPTV service. If a message is dropped for that the access device can not bear the burstness of the data flow, there appears such phenomena as a blurred screen or mosaic, then the IPTV service can not be developed normally and the boost of the IPTV service is badly affected.

In a European patent (EP A2 1185043), a data transfer system discloses a repeater. And the repeater can buffer a flow from a server computer for a set time period before forwarding the streaming packet to a client computer. The set time period is determined so that a receiving time interval of packets at the client is substantially equal to a sending time interval of packets at the server computer. In the data transferring system, the flow is defined as a set of packets related to a certain content transferring between the client computer and the server computer. And the flow registration table containing information related to each streaming flow is used to register the flow according to the content of the flow, such as destination address and port number.

In a US patent (US A 5968132), an image data communicating apparatus and communication data quantity adjusting method for the image data communicating apparatus is disclosed. The image data is transferred in a suitable quantity based on traffic of a network to avoid an effect on other services provided by the network. And the image data communicating apparatus has a traffic detecting unit for detecting traffic of the network; a communication data quantity adjusting unit for initially setting a transmittable number of image transferring frames on the basis of the detected traffic, and for automatically adjusting the quantity of data communication on basis of changing traffic on the network by altering the set number of frames.

In a US patent (US 2001/038639 A1), a method for providing network access across a shared communication medium between competing users is disclosed. In the method, each user can monitor the network access usage for a past time interval, and the network access for a future time interval is allocated for the user based on the monitored network access usage. The network access usage of user can be forecasted in a future time interval, and the users can be prioritized for allocating network access usage.

Document US 2004/042399 A1 discloses a data traffic shaping system. The data traffic shaping system includes a plurality of burst groups, each burst group having a burst group credit allocation mechanism configured to earn credit over time; a shaping engine configured to manage incoming entries of traffic and to assign each incoming entry of traffic to a selected queue of the burst group depending on the characteristics of the entry; a plurality of queues, respective queues belonging to respective burst groups; and a bandwidth allocation table including locations identifying a queue and an amount of bandwidth credit to allocate to that queue. The shaping engine is configured to traverse the locations, to determine the bandwidth earned by the queues, such credit only being made available to the queue if its assigned burst group has at least that much credit available at that instant in time, and to process an entry in that queue only if the queue has earned a predetermined minimum amount of credit, relative to the current entry on the queue in question.

Document WO 03/047179 A1 discloses a method in a packet switching system for arbitrating access for incoming channels to an outgoing channel so that each channel is constrained within a minimum bandwidth, a maximum bandwidth, and a defined inter-packed delay range by use of a transferable credit value system. The method includes a channel value for each channel, a master value, and selecting one incoming channel to be permitted to transmit a packet through the outgoing channel, upon a transmission from one of the incoming channels to the outgoing channel being permitted, changing the credit for that channel and making a corresponding change in the master value. Channels are eligible to transmit packets while they have a channel value within a specified limit. Channel values are reset when the master value falls outside a specified limit.

Document WO 2004/034731 A1 discloses a method and apparatus for traffic shaping in a packet switched network. The method includes the steps of: upon receiving through a selected period of time a plurality of incoming identifiable data traffic streams, effecting traffic shaping by selecting packets from each of the incoming data streams in accordance with a selected traffic profile, then emitting these selected packets as one or more amalgamated outgoing data traffic streams at a rate so as to maintain, that when a sum of the incoming data traffic streams instantaneous data rates is greater than a selected minimum data rate value, buffering of at least some of the incoming data traffic packets will be effected.

Document US 2004/0196788 A1 discloses a customer-specific traffic shaping method. The method involves dedicating a group of queues in the network node to the customer, performing queue-specific rate shaping on the customer's traffic according to queue-specific bandwidth limitations, and performing group-specific rate shaping on the customer's traffic as a whole according to a group-specific bandwidth limitation.

### Summary of the Invention

In view of the above, the major objective of this invention is to provide a device for shaping the traffic flow transmitted in a network so that the access device will not affected by the burst video traffic flow.

Another objective of the invention is to provide a method for shaping the traffic flow transmitted in a network so that the access device will not affected by the burst video traffic flow.

The objectives of the invention are achieved by the following technical proposals.

A method for shaping the traffic flow (TF) transmitted in a network includes the following steps:
receiving a TF from a video source server; classifying the received TF into a flow classification queue: comparing a first flow parameter with a second flow parameter for the flow classification queue, the first flow parameter indicating a first quantity of TF allowed to be sent within a set period of time for the flow classification queue and the second flow parameter indicating a second quantity of TF having been sent within the set period of time for the flow classification queue; shaping the TF according to a result of comparison; sending the shaped TF to an access device.

In the method, the set period of time is shared by all flow classification queues.

In the method, the step of classifying the received TF into the flow classification queue includes: classifying the received TF according to descriptive information in the messages of the received TF to correspond the received TF to the flow classification queue;
and the descriptive information includes at least one of the following: position information of the TF stored in the buffer, information of each field in the TF message, length information of the TF message, a destination Media Access Control (MAC) address of the TF message, a source MAC address of the TF message, a source IP address of the TF message and a destination IP address of the TF message.

In the method, the flow classification queue corresponds to a flow classification ID, the flow classification ID adopts the corresponding serial number of each TF after an ordinal sorting.

In the method, the method further includes: setting the first flow parameter for each type of TF, wherein the first flow parameter for each type ofTF is set for each type of TF respectively or for all types of TF unitively.

In the method, the steps of shaping the TF according to the result of comparison include:
during the set period of time, determining whether the second quantity of the TF having been sent in the current TF queue is larger than the first quantity of the TF allowed to be sent, if the second quantity is larger than the first Quantity within the set period of time, polling the next flow classification Queue according to the TF ID, otherwise shaping the TF in the flow classification queue.

In the method, when the set period of time is over, the second quantity of the TF having been sent for each classification queue is obtained again, and the timing of the set period of time is restarted.

In the method, the method further includes: determining whether the second quantity of the TF having been sent for the classification queue exceeds the first quantity of the TF allowed to be sent, updating the second flow parameter by subtracting the first quantity from the second quantity; otherwise, updating the second flow parameter as zero.

In the method, the set period of time is a shaping cycle.

A device for shaping TF transmitted in the network includes:
a receiving interface module, for receiving and buffering the a TF from a video source server;
a sending interface module, for sending out the TF;
a scheduling and shaping module for classifying the TF received by the receiving interface module into a flow classification queue; obtaining a second flow parameter indicating a second quantity of TF having been sent within a set period of time for the flow classification queue; comparing the second flow parameter with a first flow parameter indicating a first quantity of TF allowed to be sent within the set period of time for the flow classification queue; and controlling the sending interface module to send the TF according to a result of comparison.

The device further includes:
a controller coupled to the scheduling and sharing module, for configuring parameter information required for the scheduling and shaping by the scheduling and shaping module, the parameter information comprising the set period of time and the first flow parameter indicating the first quantity of TF allowed to be sent within the set period of time for the flow classification queue.

The device is configured at the outlet end of the video source server or inlet end of an access device, or is built in the access device.

The scheduling and shaping module schedules each flow classification queue in polling mode.

The TF includes the Ethernet frames or Asynchronous Transfer Mode (ATM) cells.

The access device includes DSLAM equipment.

It can be seen from the technical proposal provided by aforesaid present invention that problem can be effectively resolved by putting the invention into practice so as to ensure the reliability of the access device in the network.

The invention also has such advantages as simple implement process and a low cost, so for the operators, it is only needs a low cost to prevent the access device from being affected by the video flow.

### Brief Description of the Drawings

Fig 1 is an exemplary flow chart illustrating the method according to this invention.
Fig 2 is an exemplary schematic illustrating the structure of the device according to this invention.
Fig 3 is an exemplary schematic illustrating the structure of the scheduling and shaping module in Fig 2.

### Detailed description of preferred embodiments

To make the objectives, technical proposal and advantages of the invention more apparent, this invention is hereinafter described in detail with reference to the accompanying drawings and embodiments.

The core idea of the invention is that the traffic flow (TF) sent from the video server is scheduled and shaped and then sent to an access device so that a large quantity of TF will no longer be suddenly received by the access device.

In the specific application of this invention, it is possible to provide a corresponding scheduling and shaping function at any position on the TF transfer path between the video server and the access device for scheduling and shaping the burst TF; for example, the scheduling and shaping function may be configured at an outlet of a video server or inlet of an access device for shaping the video data flow so as to eliminate the influence of the data flow burst on the access device, thereby solving the problems occurred in the IPTV service development.

In this invention, various modes can be used for the scheduling and shaping processing, such as buffering and equably sending, or classifiedly scheduling and sending according to preset rules after buffering.

This invention provides a method for shaping TF transmitted in the network which is mainly used to process the possible burst TF between the video server and access device with a scheduling and shaping treatment so as to prevent the access device from being badly influenced by the burst data.

In the method, at first it is necessary to set a global parameter T (shared by all flow classification queues) referring to a time cycle for shaping which can be set by a console; and it is also necessary to set a timer for timing which may be maintained by a shaping equipment itself.

It is necessary to set two local parameters (exclusively used by each flow classification queue) for each flow classification queue,: one is the quantity of TF allowed to be sent within time T, Flow_set, which may be the number of cells or the number of bytes, etc., and this parameter may be set via the console; the other is the statistics of the quantity of the TF sent in time T, Flow_current, which also may be the number of cells or the number of bytes, etc. corresponding to the Flow_set, this parameter is maintained by internal equipment and will be reset when the device initializes.

In the implementation process of the method according to this invention, at first, the received TF from the video server need buffering, and then the scheduling and shaping treatment is made according to preset rules, which includes the following steps: setting a time cycle T and a flow parameter Flow_set which determines the quantity of the TF allowed to be sent within the time cycle T; controlling the TF sent within time T by making the statistic of quantity of the TF having currently been sent, i.e, Flow_current, comparing the Flow_current with Flow_set and resetting the Flow_current according to time T. By implementing the above steps, the TF is shaped.

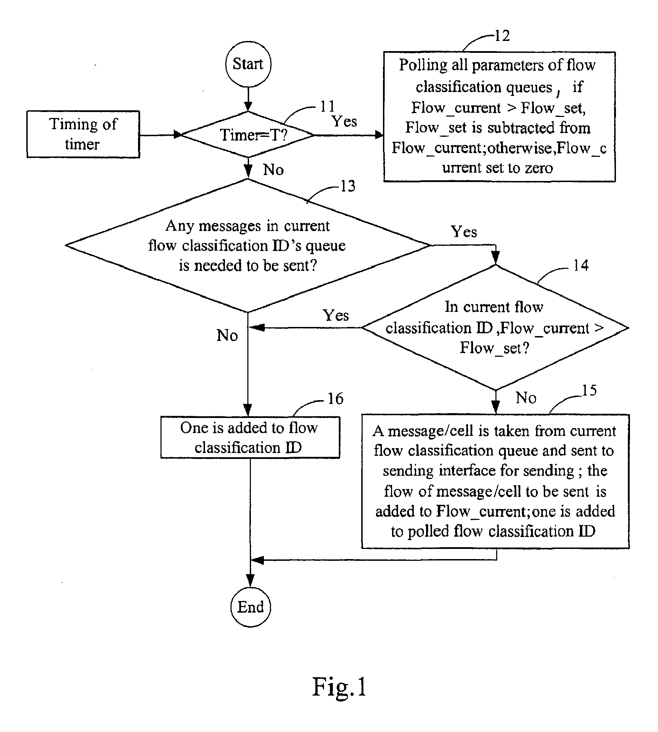

As shown in Fig 1, the processing according to the method includes the following steps:
Step 11: start the timing of the timer and determine whether a preset time is reached, if the preset time is reached, proceed to step 12; otherwise, proceed to step 13;
Step 12: poll all TF queues, i.e. poll the flow classification queue parameter which is the quantity of the TF having been sent in each queue; if the quantity of the TF having been sent set by the current flow classification queue within the set period of time is larger than that allowed to be sent, the quantity of the TF having been sent which is currently statistic is updated as the quantity of the TF having really been sent minus the quantity of that allowed to be sent; otherwise, the quantity of the TF having been sent which is currently statistic is set as zero.
Step 13: determine whether the TF queue identified by the current TF, i.e. determine whether the queue of the current flow classification ID, has messages to be sent, if yes, proceed to step 14; otherwise, proceed to step 16;
Step 14: continue to determine, for the flow classification queue corresponding to the current flow classification ID, whether the quantity of the TF having been sent in the queue of the current flow classification ID is larger than that allowed to be sent, if yes, proceed to step 16; otherwise, proceed to step 15;
Step 15: a message or a cell is taken from the current flow classification queue and sent to the sending interface for transmitting, and meanwhile the TF of the message or cell to be sent is added to the quantity of the TF having been sent and the flow classification ID is added by one for scheduling and shaping the next flow classification queue and proceed to step 11;
Step 16: the flow classification ID is added by one, and proceed to step 11, i.e. schedule and send the next TF queue:

By a continual repeating execution of the aforesaid procedures, the shaping treatment of the data sent from the video server may be realized, so that the corresponding TF may be rather smoothly received by the access device and the bad influence of the video flow burst can be avoided.

Based on the method according to this invention aforesaid, this invention also provides a simplified device for shaping the TF transmitted in the network, i.e. a device or module based on shaping the TF. The device may be particularly placed at the outlet of the video server or the inlet of the access device for shaping TF, for example, multicast or VOD (video-on-demand) TF, and may get rid of the TF burst, reduce the demand for the access device, and ensure the development of such video services as IPTV.

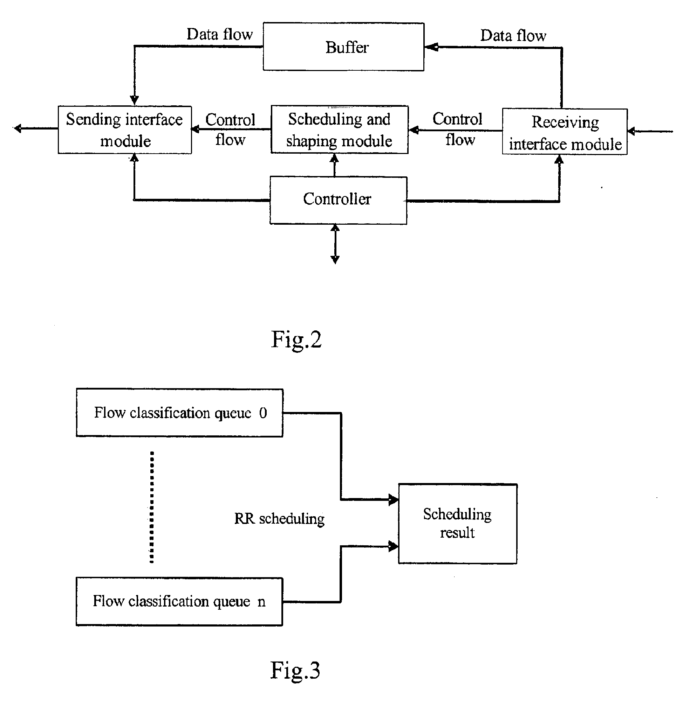

The detailed structure provided by this invention is hereinafter described; as shown in Fig 2 and Fig 3, the device preferably includes a receiving interface module, a scheduling and shaping module, a sending module and a controller, wherein:
(1) the receiving interface module is used to receive the data flow, and stores the data flow to a buffer according to a "first arrives, first processed" principle, and it is also necessary to transfer the descriptive information of the data flow to the scheduling and shaping module so as to perform a classified scheduling and shaping treatment to corresponding data flow according to the descriptive information;
   the data flow includes but not be limited to an Ethernet frame, an ATM cell etc.;
(2) the scheduling and shaping module is used to classify the multicast video flow or VOD flow according to the descriptive information, and each data flow corresponds to a corresponding queue which stores the descriptive information of the data flow. As shown in Fig 3, the descriptive information refers to characterized information different from other data, such as the place where the data flow (i.e. TF flow) is buffered in a buffer, the type information of the data flow, length information etc., the descriptive information may be the message's destination MAC address/source MAC address, source IP address/destination IP address etc. or the information carried in other fields of the data flow;
   in this module, the actual TF in the buffer is scheduled and sent according to the descriptive information in each queue, and meanwhile a statistic on quantity of the sent TF is obtained for scheduling and shaping the TF according to the statistical result in the subsequent scheduling and sending processing;
   the number of various descriptive information queues of data flow particularly provided is determined according to the number of flow classification can be or need to be supported by the device;
   in the module, it is necessary to schedule and shape the data flow according to the result of the flow classification, and send the descriptive information of data flow (i.e. classification result) to the sending interface module, and the sending interface module schedules and sends the data information of the corresponding data flow according to the descriptive information so as to realize the shaping and scheduling treatment of the data flow;
   as shown in Fig 3, an RR (round robin) scheduling method is used between flow classification queues, certainly it may be appreciated by those skilled in the art that other scheduling methods may also be used for the scheduling treatment, and there is no limitation for it in the present invention. As to the respective shaping treatment in each flow classification queue, the detailed scheduling treatment method is described in the method hereinbefore, so it is not described here in detail;
(3) the sending interface module is use to read out data flow from the buffer in light of the "first arrives, first processed" principle according to the descriptive information of the data flow transferred by the scheduling and shaping module, specifically, read out the data flow according with the descriptive information from the buffer in turn, and send the data flow;
(4) the controller is used for configuring the parameter information, that is the user configures the Flow_set parameter, time parameter T etc which are necessary for the scheduling and shaping module to perform a corresponding treatment.

The burst flow can be controlled within a certain range by setting the quantity of the timing T parameter and the quantity of TF allowed to be sent Flow_set parameter according to this invention so that the TF can certainly be processed by the access device. Furthermore this invention has been realized and verified in practice with a good influence.

The device according to this invention can be configured at the outlet of the video source server or the inlet of such access device as DSLAM so as to shape the TF. It is also possible to add a module into the existing access device as a single board or unit of the existing access device, i.e. built in the access device, for the shaping treatment of the TF received.

To sum up, the realization of this invention can possibly avoid the bad influence to the access device from the video flow burst in the development of the present IPTV service at a low cost so that the operator may smoothly develop the IPTV business, and it is possible for the equipment supplier to overcome the difficulty in rebuilding due to that the access device's performances can not meet the operation request.

The aforesaid are only preferred embodiments according to this invention rather than limitation of the scope of this invention. It should be noted that any alternations and modifications easily occurring to those skilled in the art within the technical scope disclosed by this invention shall fall into the protection scope of this invention as set by the appended claims.

## Claims

1. A method for shaping traffic flow, TF, transmitted in the network, comprising:
receiving a TF from a video source server;
classifying the received TF into a flow classification queue;
comparing a first flow parameter with a second flow parameter for the flow classification queue, the first flow parameter indicating a first quantity of TF allowed to be sent within a set period of time for the flow classification queue and the second flow parameter indicating a second quantity of TF having been sent within the set period of time for the flow classification queue;
shaping the TF according to the result of the comparison;
sending the shaped TF to an access device.

2. The method according to Claim 1, wherein the set period of time is shared by all flow classification queues.

3. The method according to Claim 1, wherein the step of classifying the received TF into the flow classification queue comprises: classifying the received TF according to descriptive information in the messages of the received TF to correspond the received TF to the flow classification queue;
wherein the descriptive information comprises at least one of the following: position information of the TF stored in the buffer, information of each field in the TF message, length information of the TF message, a destination Media Access Control (MAC) address of the TF message, a source MAC address of the TF message, a source IP address of the TF message and a destination IP address of the TF message.

4. The method according to Claim 1, wherein the flow classification queue corresponds to a flow classification ID, the flow classification ID adopts the corresponding serial number of each TF after an ordinal sorting.

5. The method according to Claim 1, wherein the method further comprises: setting the first flow parameter for each type of TF, wherein the first flow parameter for each type of TF is set for each type of TF respectively or for all types of TF unitively.

6. The method according to Claim 4, wherein the step of shaping the TF according to the result of comparison comprises:
during the set period of time, determining whether the second quantity of the TF having been sent in the current TF queue is larger than the first quantity of the TF allowed to be sent, if the second quantity is larger than the first quantity within the set period of time, polling the next flow classification queue according to the TF ID; otherwise shaping the TF in the flow classification queue.

7. The method according to any of Claim 1 to Claim 5, wherein
when the set period of time is over, the second quantity of the TF having been sent for each classification queue is obtained again, and the timing of the set period of time is restarted.

8. The method according to Claim 1 to Claim 5, wherein the method further comprises:
determining whether the second quantity of the TF having been sent for the classification queue exceeds the first quantity of the TF allowed to be sent, updating the second flow parameter by subtracting the first quantity from the second quantity; otherwise, updating the second flow parameter as zero.

9. The method according to Claim 1, wherein the set period of time is a shaping cycle.

10. A device for shaping traffic flow (TF) transmitted in the network, comprising:
a receiving interface module, for receiving and buffering a TF from a video source server;
a sending interface module, for sending out the TF;
a scheduling and shaping module, for classifying the TF received by the receiving interface module into a flow classification queue; obtaining a second flow parameter indicating a second quantity of TF having been sent within a set period of time for the flow classification queue; comparing the second flow parameter with a first flow parameter indicating a first quantity of TF allowed to be sent within the set period of time for the flow classification queue; and controlling the sending interface module to send the TF according to the result of the comparison.

11. The device according to Claim 10, further comprising:
a controller coupled to the scheduling and shaping module, for configuring parameter information required for the scheduling and shaping by the scheduling and shaping module, the parameter information comprising the set period of time and the first flow parameter indicating the first quantity of TF allowed to be sent within the set period of time for the flow classification queue.

12. The device according to Claim 10 or 11, wherein the device is configured at an outlet end of the video source server or inlet end of an access device, or is built in the access device.

13. The device according to Claim 12, wherein the scheduling and shaping module schedules each flow classification queue in a polling mode.

14. The device according to Claim 10 or 11, wherein the TF comprises Ethernet frames or Asynchronous Transfer Mode (ATM) cells.

15. The device according to Claim 10 or 11, wherein the access device comprises a digital subscriber line access multiplexer (DSLAM) equipment.

## Patentansprüche

1. Verfahren zum Formen eines Verkehrsflusses, TF, der im Netz übertragen wird, das Folgendes umfasst:
Empfangen eines TF von einem Videoquellenserver;
Klassifizieren des empfangenen TF in eine Flussklassifikationswarteschlange;
Vergleichen eines ersten Flussparameters mit einem zweiten Flussparameter für die Flussklassifikationswarteschlange, wobei der erste Flussparameter eine erste Menge an TF angibt, deren Senden innerhalb einer festgelegten Zeitdauer für die Flussklassifikationswarteschlange zulässig ist, und der zweite Flussparameter eine zweite Menge an TF angibt, die innerhalb der festgelegten Zeitdauer für die Flussklassifikationswarteschlange gesendet wurde;
Formen des TF gemäß dem Ergebnis des Vergleichs;
Senden des geformten TF zu einer Zugriffsvorrichtung.

2. Verfahren nach Anspruch 1, wobei die festgelegte Zeitdauer von allen Flussklassifikationswarteschlangen gemeinsam genutzt wird.

3. Verfahren nach Anspruch 1, wobei der Schritt des Klassifizierens des empfangenen TF in die Flussklassifikationswarteschlange Folgendes umfasst: Klassifizieren des empfangenen TF gemäß Beschreibungsinformationen in den Nachrichten des empfangenen TF, um den empfangenen TF mit der Flussklassifikationswarteschlange in Übereinstimmung zu bringen;
wobei die Beschreibungsinformationen Folgendes umfassen: Positionsinformationen des TF, der im Puffer gespeichert ist, Informationen jedes Feldes in der TF-Nachricht, Längeninformationen der TF-Nachricht, eine Ziel-Medienzugriffssteueradresse (Ziel-MAC-Adresse) der TF-Nachricht, eine Quellen-MAC-Adresse der TF-Nachricht, eine Quellen-IP-Adresse der TF-Nachricht und/oder eine Ziel-IP-Adresse der TF-Nachricht.

4. Verfahren nach Anspruch 1, wobei die Flussklassifikationswarteschlange einer Flussklassifikations-ID entspricht, wobei die Flussklassifikations-ID die entsprechende Seriennummer jedes TF nach einer Ordnungssortierung annimmt.

5. Verfahren nach Anspruch 1, wobei das Verfahren ferner Folgendes umfasst:
Festlegen des ersten Flussparameters für jeden Typ von TF, wobei der erste Flussparameter für jeden Typ von TF jeweils für jeden Typ von TF oder einheitlich für alle Typen von TF festgelegt wird.

6. Verfahren nach Anspruch 4, wobei der Schritt des Formens des TF gemäß dem Ergebnis des Vergleichs Folgendes umfasst:
während der festgelegten Zeitdauer Feststellen, ob die zweite Menge des TF, die in der aktuellen TF-Warteschlange gesendet wurde, größer ist als die erste Menge des TF, deren Senden zugelassen ist, wenn die zweite Menge größer ist als die erste Menge innerhalb der festgelegten Zeitdauer, Abfragen der nächsten Flussklassifikationswarteschlange gemäß der TF-ID; ansonsten Formen des TF in der Flussklassifikationswarteschlange.

7. Verfahren nach einem von Anspruch 1 bis Anspruch 5, wobei wenn die festgelegte Zeitdauer vorüber ist, die zweite Menge des TF, die für jede Klassifikationswarteschlange gesendet wurde, wieder erhalten wird und der Zeitablauf der festgelegten Zeitdauer erneut gestartet wird.

8. Verfahren nach Anspruch 1 bis Anspruch 5, wobei das Verfahren ferner Folgendes umfasst:
Feststellen, ob die zweite Menge des TF, die für die Klassifikationswarteschlange gesendet wurde, die erste Menge des TF, deren Senden zugelassen ist, übersteigt, Aktualisieren des zweiten Flussparameters durch Subtrahieren der ersten Menge von der zweiten Menge; ansonsten Aktualisieren des zweiten Flussparameters als null.

9. Verfahren nach Anspruch 1, wobei die festgelegte Zeitdauer ein Formungszyklus ist.

10. Vorrichtung zum Formen eines Verkehrsflusses (TF), der im Netz übertragen wird, die Folgendes umfasst:
ein Empfangsschnittstellenmodul zum Empfangen und Puffern eines TF von einem Videoquellenserver;
ein Sendeschnittstellenmodul zum Aussenden des TF;
ein Zeitplanungs- und Formungsmodul zum Klassifizieren des vom Empfangsschnittstellenmodul empfangenen TF in eine Flussklassifikationswarteschlange; Erhalten eines zweiten Flussparameters, der eine zweite Menge des TF angibt, die innerhalb einer festgelegten Zeitdauer für die Flussklassifikationswarteschlange gesendet wurde; Vergleichen des zweiten Flussparameters mit einem ersten Flussparameter, der eine erste Menge des TF angibt, deren Senden innerhalb der festgelegten Zeitdauer für die Flussklassifikationswarteschlange zugelassen ist; und Steuern des Sendeschnittstellenmoduls, um den TF gemäß dem Ergebnis des Vergleichs zu senden.

11. Vorrichtung nach Anspruch 10, die ferner Folgendes umfasst:
eine Steuereinheit, die mit dem Zeitplanungs- und Formungsmodul gekoppelt ist, zum Konfigurieren von Parameterinformationen, die für das Zeitplanen und Formen durch das Zeitplanungs- und Formungsmodul erforderlich sind, wobei die Parameterinformationen die festgelegte Zeitdauer und den ersten Flussparameter, der die erste Menge des TF angibt, deren Senden innerhalb der festgelegten Zeitdauer für die Flussklassifikationswarteschlange zugelassen ist, umfassen.

12. Vorrichtung nach Anspruch 10 oder 11, wobei die Vorrichtung an einem Auslassende des Videoquellenservers oder einem Einlassende einer Zugriffsvorrichtung konfiguriert ist oder in die Zugriffsvorrichtung eingebaut ist.

13. Vorrichtung nach Anspruch 12, wobei das Zeitplanungs- und Formungsmodul jede Flussklassifikationswarteschlange in einem Abfragemodus zeitlich plant.

14. Vorrichtung nach Anspruch 10 oder 11, wobei der TF "Ethernet"-Rahmen oder Zellen des asynchronen Übertragungsmodus (ATM) umfasst.

15. Vorrichtung nach Anspruch 10 oder 11, wobei die Zugriffsvorrichtung eine Zugriffsmultiplexer-Ausrüstung einer digitalen Teilnehmerleitung (DSLAM-Ausrüstung) umfasst.

## Revendications

1. Procédé de mise en forme d'un flux de trafic, TF (Traffic Flow), transmis sur le réseau, comprenant : la réception d'un TF d'un serveur de source vidéo ;
la classification du TF reçu dans une file d'attente de classification de flux ;
la comparaison d'un premier paramètre de flux à un second paramètre de flux pour la file d'attente de classification de flux, le premier paramètre de flux indiquant une première quantité du TF dont l'envoi peut être autorisé au cours d'une période de temps réglée pour la file d'attente de classification de flux et le second paramètre de flux indiquant une seconde quantité du TF ayant été envoyé au cours de la période de temps réglée pour la file d'attente de classification de flux ;
la mise en forme du TF conformément au résultat de la comparaison ;
l'envoi du TF mis en forme à un dispositif d'accès.

2. Procédé selon la revendication 1, dans lequel la période de temps réglée est partagée par toutes les files d'attente de classification de flux.

3. Procédé selon la revendication 1, dans lequel l'étape de classification du TF reçu dans la file d'attente de classification de flux comprend : la classification du TF reçu conformément à des informations descriptives contenues dans les messages du TF reçu afin de faire correspondre le TF reçu avec la file d'attente de classification de flux ;
dans lequel les informations descriptives comprennent au moins l'une des informations suivantes : des informations de position du TF stockées dans le tampon, des informations de chaque champ contenues dans le message TF, des informations de longueur du message TF, une adresse de Contrôle d'Accès au Support (MAC, Media Access Control) de destination du message TF, une adresse MAC de source du message TF, une adresse IP de source du message TF et une adresse IP de destination du message TF.

4. Procédé selon la revendication 1, dans lequel la file d'attente de classification de flux correspond à un ID de classification de flux, et l'ID de classification de flux adopte le numéro de série correspondant de chaque TF après un tri ordinal.

5. Procédé selon la revendication 1, dans lequel le procédé comprend en outre : le réglage du premier paramètre de flux pour chaque type de TF, le premier paramètre de flux pour chaque type de TF étant réglé respectivement pour chaque type de TF ou de manière unitaire pour tous les types de TF.

6. Procédé selon la revendication 4, dans lequel l'étape de mise en forme du TF conformément au résultat de la comparaison comprend :
pendant la période de temps réglée, la détermination du fait de savoir si la seconde quantité du TF ayant été envoyé dans la file d'attente de TF courante est supérieure à la première quantité du TF dont l'envoi est autorisé, si la seconde quantité est supérieure à la première quantité au cours de la période de temps réglée,
l'interrogation de la file d'attente de classification de flux suivante conformément à l'ID du TF ; et dans le cas contraire, la mise en forme du TF dans la file d'attente de classification de flux.

7. Procédé selon l'une quelconque des revendications 1 à 5, dans lequel lorsque la période de temps réglée est terminée, la seconde quantité du TF ayant été envoyé pour chaque file d'attente de classification est de nouveau obtenue, et le chronométrage de la période de temps réglée est recommencé.

8. Procédé selon les revendications 1 à 5, dans lequel le procédé comprend en outre :
la détermination du fait de savoir si la seconde quantité du TF ayant été envoyé pour la file d'attente de classification dépasse la première quantité du TF dont l'envoi est autorisé, la mise à jour du second paramètre de flux en soustrayant la première quantité à la seconde quantité ; et dans le cas contraire, la mise à jour du second paramètre de flux à zéro.

9. Procédé selon la revendication 1, dans lequel la période de temps réglée est un cycle de mise en forme.

10. Dispositif destiné à mettre en forme un flux de trafic (TF) transmis sur le réseau, comprenant :
un module d'interface de réception, destiné à recevoir et à mettre en tampon un TF provenant d'un serveur de source vidéo ;
un module d'interface d'envoi, destiné à envoyer le TF en sortie ;
un module de planification et de mise en forme, destiné à classer le TF reçu par le module d'interface de réception dans une file d'attente de classification de flux ; à obtenir un second paramètre de flux indiquant une seconde quantité du TF ayant été envoyé au cours d'une période de temps réglée pour la file d'attente de classification de flux ; à comparer le second paramètre de flux à un premier paramètre de flux indiquant une première quantité du TF dont l'envoi est autorisé au cours de la période de temps réglée pour la file d'attente de classification de flux ; et à commander le module d'interface d'envoi afin qu'il envoie le TF conformément au résultat de la comparaison.

11. Dispositif selon la revendication 10, comprenant en outre :
une unité de commande reliée au module de planification et de mise en forme, pour configurer des informations de paramètres requises pour la planification et la mise en forme par le module de planification et de mise en forme, les informations de paramètres comprenant la période de temps réglée et le premier paramètre de flux indiquant la première quantité de TF dont l'envoi est autorisé au cours de la période de temps réglée pour la file d'attente de classification de flux.

12. Dispositif selon la revendication 10 ou 11, dans lequel le dispositif est configuré à une extrémité de sortie du serveur de source vidéo ou à une extrémité d'entrée d'un dispositif d'accès, ou est intégré au dispositif d'accès.

13. Dispositif selon la revendication 12, dans lequel le module de planification et de mise en forme planifie chaque file d'attente de classification de flux dans un mode d'interrogation.

14. Dispositif selon la revendication 10 ou 11, dans lequel le TF comprend des trames Ethernet ou des cellules de Mode de Transfert Asynchrone (ATM, Asynchronous Transfer Mode).

15. Dispositif selon la revendication 10 ou 11, dans lequel le dispositif d'accès comprend un équipement multiplexeur d'accès de ligne d'abonné numérique (DSLAM, Digital Subscriber Line Access Multiplexer).
